# EUROPEAN PATENT APPLICATION

(11) **EP 1 762 514 A1**
(43) Date of publication of application: **14.03.2007**
(21) Application number: 06018492.6
(22) Date of filing: 04.09.2006
(51) Int. Cl.: B65G 69/28, B60P 1/43, B66F 7/24

(54) **Loading ramp**

(30) Priority: 07.09.2005 IT MO20050222
(71) Applicant: C.L.M. Societa' A Responsabilita' Limitata, 41030 Bomporto MO (IT)
(72) Inventor: Baraldi, Gino, 41100 Modena (IT); Baraldi, Walter, 41100 Modena (IT); Baraldi, Andrea, 41100 Modena (IT)
(74) Representative: Feltrinelli, Secondo Andrea

(57) **Abstract**

The ramp, suitable for providing a connection between transport vehicles' (3) flatbeds (2) and the ground (4), includes a substantially flat body with a surface (6) on which vehicles (3) can run in one run direction (A), running lanes means (7) mounted on said surface (6), said running lanes means (7) being moveable parallel to each other in a direction (B) that is transverse to said run direction (A).

## Description

The invention regards a ramp, particularly suitable for loading and unloading vehicles used on building sites on the flatbeds of vehicles used to transport them.

Vehicles used on building sites which are equipped with crawler tracks or rubber wheels whose treads possess large claws to increase their adherence to various types of terrain, are well-known.

These vehicles usually move around building sites where the terrain is especially rough and slippery, and their speeds are noticeable slow.

When they need to be transferred from one building site to another, other vehicles are used that are faster and more suitable for traveling quickly on roads and which are equipped with flatbeds on which are loaded the vehicles used on building sites.

Special ramps, which can generally be disassembled, are employed to allow the vehicles used on building sites to board these flatbeds; these ramps are placed adjacent to the rear edges of the flatbeds and attached to them so as to provide a connection between the flatbeds and the ground.

At the present, known ramps are built in the form of lanes or continuous platforms and in such a way as to be able to be used to load and unload a specific type of vehicle used on building sites; therefore, their structure and their contact surface are designed at the time of construction to facilitate adherence during the boarding and deboarding of vehicles used on building sites for which they were manufactured, and also to avoid damage to the ramps.

In other words, one specific known type of ramp is built to allow vehicles used on building sites with crawler tracks to be loaded and unloaded, another known type of ramp is built to allow vehicles used on building sites with rubber wheels equipped with large claws to be loaded and unloaded, a further known type of ramp is built to allow vehicles used on building sites with rollers, such as stone crushers, to be loaded and unloaded.

This state of the art has a drawback, i.e. to be able to load and unload different types of vehicles used on building sites on transport vehicles' flatbeds, it is necessary to possess the same number of types of ramps that are suitable for boarding and deboarding each different type of vehicle used on building sites.

This results in another drawback, i.e. the high cost that must be sustained to be able to have many different types of ramps on hand.

A further drawback is that to have many different types of ramps on hand it is also necessary to have available a large space in which they can be stored when they are not in use.

One object of the invention is to improve the current state of the art.

Another object of the invention is to build a single ramp that can be used by itself to load and unload any type of vehicle used on building sites on the flatbeds of transport vehicles, i.e. those equipped with crawler tracks, wheels equipped with large claws, or rollers.

According to the invention it is provided a ramp suitable for providing a connection between the loading flatbeds of transport vehicles and the ground, comprising: a substantially flat body having a surface which is practicable according to one run direction, running lanes mounted on said surface, characterized by the fact that said running lanes can be moved parallel to each other in a direction that is transverse to said run direction.

Therefore, the ramp allows the loading and unloading on the loading flatbeds of transport vehicles, vehicles equipped with organs for movement over particularly rough terrain such as crawler tracks, rubber wheels possessing claws, or rollers with which vehicles used on building sites are normally equipped, without necessarily possessing a large number of different types of ramps, each one of which is designed to be used with a specific type of vehicle.

Further characteristics and advantages of the invention are more evident from the detailed description of a ramp that is particularly suitable for loading and unloading vehicles used on building sites on the flatbeds of vehicles used to transport them, illustrated by way of example, and in a nonrestrictive manner, in the accompanying sheet of drawings in which:
Figure 1 is a partially interrupted perspective view of a ramp that is particularly suitable for loading and unloading vehicles used on building sites on the flatbeds of vehicles used to transport them;
Figure 2 is an interrupted side view of the ramp illustrated in Figure 1;

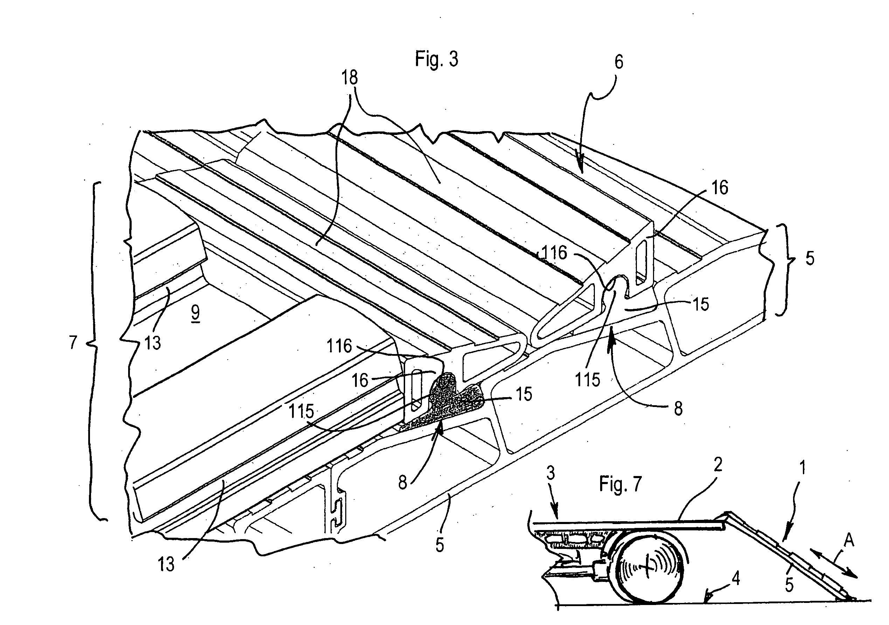

Figure 3 is an interrupted perspective view of an end portion of the ramp illustrated in Figure 1;
Figure 4 is an enlarged side view of an end portion of running lanes means;
Figure 5 is an enlarged side view of guide means that can be engaged in a sliding manner with the end portion of Figure 4;
Figure 6 is a transverse cross-sectional view of the ramp illustrated in Figure 1, taken according to a VI-VI plan;
Figure 7 is an interrupted schematic view of the rear part of a transport vehicle to which the ramp illustrated in Figure 1 has been placed adjacent and attached.

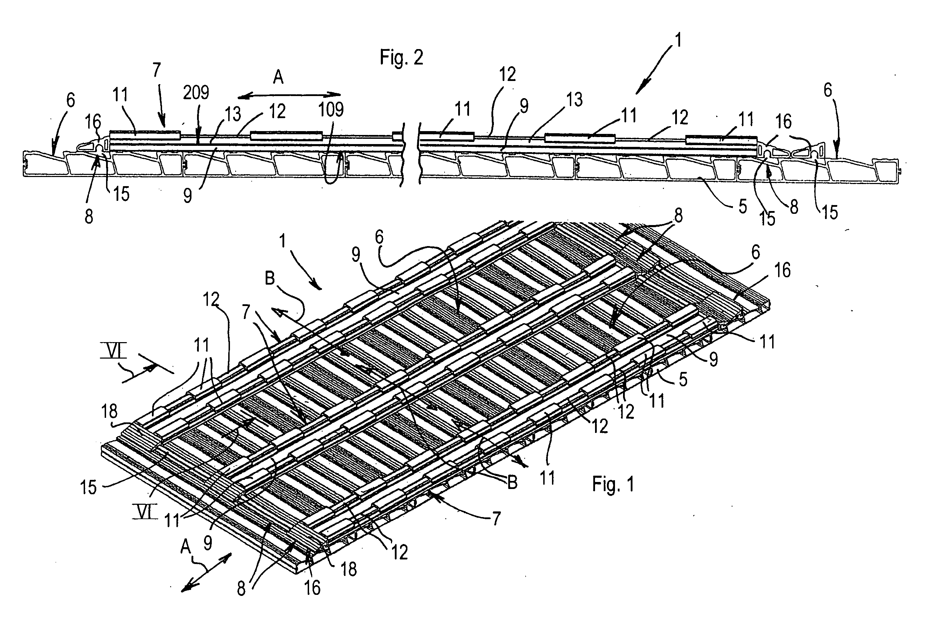

With reference to Figure 1, the number 1 indicates a ramp, suitable for providing a connection between the flatbeds 2 of transport vehicles 3 and the ground 4.

The ramp 1 comprises a substantially flat body 5 with a contact surface 6 on which vehicles can move in one direction indicated by the double arrow "A."

On the surface 6 are mounted running lanes means 7 which, as described below, can be moved parallel to each other in a direction, indicated by the double arrow "B," that is perpendicular to the direction of motion "A."

The running lanes means 7 are mounted on the contact surface 6 in a removable manner, for example with screws or rivets, and comprise guide means 8 arranged according to the perpendicular direction "B."

The running lanes means 7 include, according to the embodiment of the ramp 1 illustrated in Figure 1, a group of three parallel longitudinal members 9 that are attached onto the surface 6 according to the direction of motion "A"; each longitudinal member 9 defines an application surface 109 facing the surface 6 and an opposing face 209.

On the latter joining means 10 is obtained lengthwise, in which are employed a number of first elements 11 and second elements 12 that can be walked on, all of which protrude from the joining means 10 and with the first elements 11 that are higher than the second elements 12.

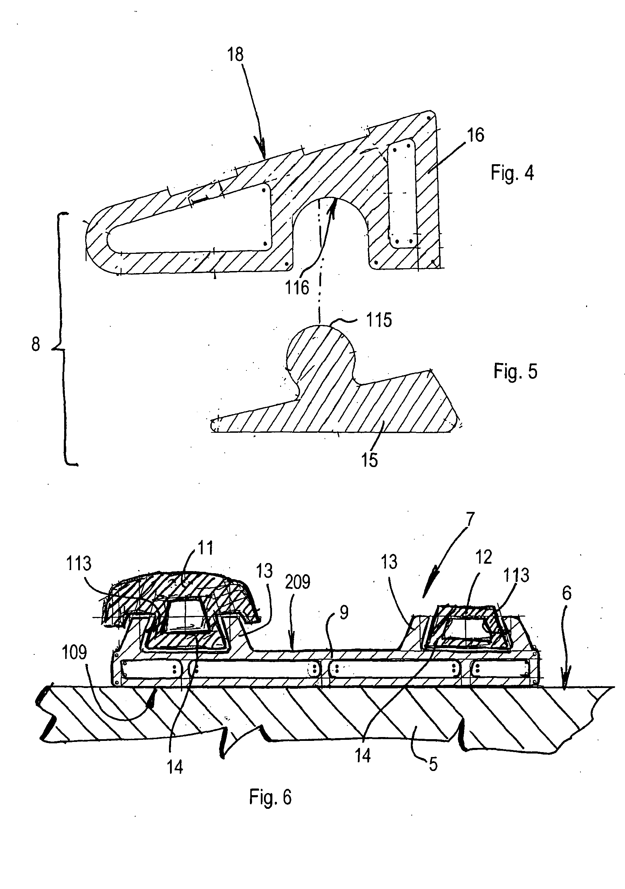

The latter include at least a pair of ribs 13 in raised relief from the opposing face 209 and in which a corresponding groove 113 is obtained lengthwise and that, as can be seen in Figure 6, has a dovetailed transverse section whose tapered part is facing outwards and the opposing divergent part is facing toward the opposing face 209.

Each of the first elements 11 and second elements 12 has a corresponding foot 14 which also has a dovetailed transverse section designed to slide inside a corresponding groove 113 to constitute a support that can be stepped on, for crawler tracks or rubber wheels equipped with claws, which are normally employed on machines used on building sites.

As can be seen in Figures 1 and 2, the first elements 11 and the second elements 12 are long-shaped and are inserted in their respective grooves 113 alternately in such a manner that the support for crawler tracks or rubber wheels with claws occurs on different and alternating levels, thereby creating a sort of gear toothing that facilitate adherence for boarding or deboarding along ramp 1.

The guide means 8 includes rail means 15 that is attached onto the surface 6 and arranged according to perpendicular direction "B."

In the rails 15 can be engaged corresponding end elements 16 that are attached to the respective ends of each longitudinal member 9 and that can be joined with the rails 15 in such a manner as to slide along them.

As can be seen in Figure 5, the rails 15 have a transverse section that forms a convex profile 115, in the present case, a spherical profile and, therefore, the end elements 16 have a transverse section that shapes, in the portion considered to be lower facing the surface 6, a concave groove (116) that has a semispherical transverse section and with which the convex profile 115 can be coupled.

In an alternative form of the ramp 1, the convex profiles 115 and the concave grooves 116 can switch places: therefore, the convex profiles 115 can be placed in the lower portion of the end elements 16 and the concave grooves 116 can be placed in the portion of the rails 15 that is considered the upper area, facing the end elements 16.

The latter have inclined surfaces 18 facing outwards that are designed to facilitate boarding or deboarding on, or by, the number of first elements 11 and second elements 12 when they are inserted in the grooves 113 of the ribs 13.

The functioning of the ramp 1 is as follows: it is placed adjacent and attached to a rear edge of a loading flatbed 2 of a transport vehicle 3, as can be seen in Figure 7, so as to provide a connection surface between the ground 4 and the loading flatbed 2.

The ramp 1 is preventively placed to adjust to the center distance between the crawler tracks or the wheels of a vehicle to be loaded.

To carry out this adjustment, the longitudinal members 9 are brought closer together or are set farther apart, by sliding the end elemnts 16 on the rails 15, according to the perpendicular direction "B".

In this manner, the crawler tracks or the wheels are positioned directly on top of the first elements 11 and the second elements 12, inserted into the grooves 113 of the ribs 13 and not on the surface 6 of the body 5 which, therefore is protected from damage resulting from contact with the crawler tracks or the claws of the rubber wheels with which the vehicles to be loaded are equipped.

The alternative arrangement of the first elements 11 that are higher and the second elements 12 that are lower, along the ribs 13, creates a staggered support zone that facilitates the adherence of the vehicles during the flatbed 2 loading and unloading phases.

When the first elements 11 and the second elements 12 are heavily worn or damaged, or whenever it is necessary to adjust the ramp 1 to a new vehicle to be loaded or unloaded, it is enough to replace them, without any need to replace the entire ramp 1.

Furthermore, the materials with which the first elements 11 and the second elements 12 are constructed, can be chosen in such a way as to be able to adjust to wear and tear that results in more or less wear or to vehicles that require a fairly high degree of adherence to be able to board or deboard from ramp 1.

## Claims

1. Ramp, suitable for providing a connection between the loading flatbeds (2) of transport vehicles (3) and the ground, comprising: a substantially flat body (5) with a surface (6) which is practicable according to one run direction (A), running lanes means (7) mounted onto said surface (6), **characterized by** the fact that said running lanes means (7) can be moved parallel to each other in a direction that is transverse (B) to said run direction (A).

2. Ramp according to claim 1, wherein said transverse direction (B) is perpendicular to said run direction (A).

3. Ramp according to claim 1, wherein said running lanes means (7) are mounted onto said surface (6) in a removable manner.

4. Ramp according to claim 1 or 2, wherein said running lanes means (7) include guide means (8) arranged according to said transverse direction (B).

5. Ramp according to anyone of claims 1 or 3 or 4, wherein said running lanes means (7) includes: a longitudinal member (9) that can be attached onto said surface (6) according to said run direction (A) and that defines an application surface (109) facing said surface (6) and an opposing face (209); joining means (10) obtained lengthwise on said opposing face (209); a number of elements (11, 12) that can be walked on and that can be engageable in said joining means (10) and that protrude from them.

6. Ramp according to claim 5, wherein said joining means (10) includes at least one rib (13) in raised relief from said opposing face (209) that is crossed lengthwise by a groove (113) having a transverse section designed to hold said number of elements (11, 12) that can be walked on, engaged in said groove (113).

7. Ramp according to claim 6, wherein said transverse section of said groove (113) is shaped in a dovetail that defines a tapered facing outwards and an opposing divergent part facing toward said opposing face (209).

8. Ramp according to claim 6 or 7, wherein said number of elements that can be walked on includes first elements (11) and second elements (12), with said first elements (11) being higher than said second elements (12).

9. Ramp according to anyone of claims from 5 to 8, wherein said first elements parts (11) and second elements (12) are placed in an alternating manner in said groove (113).

10. Ramp according to claim 4 or 5, wherein said guide means (8) includes: rail means (15) attached to said surface (6); end elements (16) attached to the respective ends of said longitudinal member (9) and connectible in a sliding manner with said rail means (15).

11. Ramp according to claim 10, wherein said rail means (15) has a transverse section shaping a convex profile (115) and that said end elements (16) have a transverse section shaping a concave groove (116) that can be coupled with said convex profile (115).

12. Ramp according to claim 10, wherein said rail means (15) has a transverse section shaping a concave groove (116) and that said end elements (16) have respective transverse section shaping a convex profile (115) that can be coupled with said concave groove (116).

13. Ramp according to anyone of claims from 8 to 10, wherein said end elements (16) have inclined surfaces (18) designed to facilitate boarding or deboarding on, or by, said number of first elements (11) and second elements (12).
